# EUROPEAN PATENT APPLICATION

(11) **EP 4 693 448 A1**
(43) Date of publication of application: **11.02.2026**
(21) Application number: 24805748.1
(22) Date of filing: 17.07.2024
(51) Int. Cl.: H01M 4/134, H01M 4/1395, H01M 4/36, H01M 4/38, H01M 4/583, H01M 10/052, H01M 4/02

(54) **MULTI-COMPONENT SILICON COMPOSITE NEGATIVE ELECTRODE MATERIAL FOR LITHIUM SECONDARY BATTERY AND MANUFACTURING METHOD THEREOF**

(30) Priority: 28.06.2024 KR 20240085318
(71) Applicant: Chang Sung Co., Incheon 21628 (KR)
(72) Inventor: YANG, Seung Nam, Uiwang-si, Gyeonggi-do 16021 (KR); LEE, Tae Kyung, Incheon 22185 (KR); CHOI, Nam Kyu, Incheon 21387 (KR); SHIN, Min Jong, Incheon 21648 (KR)
(74) Representative: Zimmermann, Tankred Klaus
(86) International application number: PCT/KR2024/010296
(87) International publication number: WO 2026/005097

(57) **Abstract**

One embodiment of the present invention provides for a silicon composite anode material. The anode material for lithium secondary batteries according to one embodiment of the present invention has the buffering effect by the multicomponent silicide matrix surrounding the silicon nanoparticles against the volume expansion of silicon nanoparticles. In addition, by adding copper (Cu) to the multicomponent silicide matrix, lifetime can be improved due to the stress relief and improvement of electrical conductivity on the base, and the optimal ratio of copper (Cu) and boron (B) is set to achieve stress relief through improvement of strength and ductility, thus solving the particle destruction problem of silicon anode materials during charging and discharge cycles.

## Description

### BACKGROUND

The disclosure relates to a silicon negative electrode material and a method for manufacturing the same.

The demand for energy storage devices is rapidly increasing due to the increase in the use of portable electronic devices and the expansion of the electric vehicle market. Among them, lithium secondary batteries are one of the energy storage devices that are receiving attention due to their high operating voltage of 3.7 V on average, high energy density of 200 Wh/kg, and 600 Wh/L.

In the case of graphite, the most commercialized cathode material in lithium secondary batteries, silicon, which shows a large charge/discharge capacity, is receiving attention as a next-generation cathode material due to its low theoretical capacity (LiC₆ 372 mAh/g); however, while the theoretical volume change rate due to lithium ion intercalation during charge/discharge cycles is 110% for carbon, silicon (Li₁₅Si₄) experiences a volume change of 280% at room temperature.

Due to this volume change, cracks and breakage of silicon particles occur, increasing the surface area of the active material particles, and causing destruction and regeneration of the SEI (Solid Electrolyte Interphase) layer formed on the surface, resulting in decreased efficiency between cycles and rapid capacity deterioration. Therefore, various studies are being conducted to accommodate and suppress this large volume change of silicon.

One of them is to reduce the absolute volume expansion rate during expansion by reducing the size of silicon particles to nanoscale, thereby relieving the physical stress caused by the volume change. Second, there is a method of forming silicide by adding a conductive metal element that does not react with lithium, and using the formed silicide matrix to alleviate the volume expansion of silicon. Another method is to manufacture porous silicon, wherein porous silicon has the advantage of not only buffering the volume expansion with pores, but also increasing the contact area between the electrolyte and the electrode, which allows for rapid diffusion of Li ions; however, since it is difficult to control the specific surface area of silicon during etching, it is difficult to secure the reliability of the powder, and there are problems such as a large amount of wastewater being generated during the manufacturing process. In order to improve the properties of silicon materials, various methods such as controlling the shape and particle size of the material, alloying, oxidation, and composites with carbon materials are being attempted.

Among these, silicon negative electrode materials using a silicide matrix are manufactured by selecting the composition and alloy system so that the silicon phase and the silicide matrix phase are phase separated when the melted alloy in the melting furnace is cooled due to the difference in the melting point and mixing enthalpy of each element and alloy.

In the case of ternary and quaternary alloy powders such as Si-Al-Ni or Si-Al-Fe-Ni, the silicon phase is surrounded by a silicide matrix phase, and the silicon phase is composed of a structure in which the silicide matrix phase surrounds the silicon phase; in the case of these ternary and quaternary systems, although they show good characteristics in terms of initial discharge capacity and efficiency, capacity decreases as the cycle progresses, and good cycle life stability cannot be secured. This is because the surrounding silicide matrix phase does not sufficiently buffer the volume change of the silicon phase inside the powder.

In order to commercialize silicon alloy negative electrode materials, it is important to design a microstructure in which the silicate matrix phase can sufficiently cushion the volume expansion of the silicon phase.

### <Related art document>

Republic of Korea Patent Publication No. 10-2023-0096191

### SUMMARY

An aspect of the disclosure is to provide a multicomponent silicon composite negative electrode material for a lithium secondary battery.

The aspect of the disclosure is not limited to that mentioned above, and other aspects not mentioned will be clearly understood by those skilled in the art from the description below.

An example of the disclosure provides a silicon composite negative electrode material.

The silicon composite negative electrode material according to an example of the disclosure may include: a multicomponent silicide matrix containing aluminum (Al), nickel (Ni), boron (B), copper (Cu), and silicon (Si); and crystalline silicon nanoparticles impregnated within the silicon matrix.

In addition, according to an example of the disclosure, the multicomponent silicide matrix may be composed of a material represented by Chemical Formula 1:

[Chemical Formula1] Siₐ(Al_{b}Ni_{c}Cu_{d}Bₑ)

where a is a real number between 0.24 and 0.75, b is a real number between 0.18 and 0.33, c is a real number between 0.03 and 0.2, d is a real number between 0.03 and 0.13, and e is a real number between 0.01 and 0.1.

In addition, according to an example of the disclosure, the content of the aluminum (Al) may be 18 atomic% or more and 33 atomic% or less relative to the total content of the entire multicomponent silicon matrix.

In addition, according to an example of the disclosure, the content of the nickel (Ni) may be 3 atomic% or more and 20 atomic% or less relative to the total content of the entire multicomponent silicon matrix.

In addition, according to an example of the disclosure, the content of the boron (B) may be 1 atomic% or more and 10 atomic% or less relative to the total content of the entire multicomponent silicon matrix.

In addition, according to an example of the disclosure, the content of the copper (Cu) may be 3 atomic% or more and 13 atomic% or less relative to the total content of the entire multicomponent silicon matrix.

In addition, according to an example of the disclosure, the sum of the atomic % of the copper (Cu) and the atomic % of boron (B) may be 7 atomic % or more and 12 atomic % or less.

In addition, according to an example of the disclosure, with respect to the content of the copper (Cu) and boron (B), a ratio of Cu atom%/(Cu atom% + B atom%) may be 71% or more and 83% or less.

In addition, according to an example of the disclosure, the atomic % of silicon of the silicon composite negative electrode material may be the remainder after containing the aluminum, nickel, boron, and copper.

Another example of the disclosure provides a method for manufacturing a silicon composite negative electrode material.

The method for manufacturing a silicon composite negative electrode material according to an example of the disclosure may include: manufacturing a melt by putting aluminum (Al), nickel (Ni), boron (B), copper (Cu) and silicon (Si) metals in a specific mixing ratio into a crucible and melting them; and rapidly cooling the melt with high-pressure sprayed water and then classifying powder to manufacture silicon negative electrode material powder in which crystalline silicon is impregnated inside a multicomponent silicide matrix.

In addition, according to an example of the disclosure, in the manufacturing of the melt,
the content of the aluminum (Al) may be 18 atomic% or more and 33 atomic% or less with respect to the entire melt, the content of the nickel (Ni) may be 3 atomic% or more and 20 atomic% or less with respect to the entire melt, the content of the boron (B) may be 1 atomic% or more and 10 atomic% or less with respect to the entire melt, the content of the copper (Cu) may be 3 atomic% or more and 13 atomic% or less with respect to the entire melt, and the remainder may be silicon.

In addition, according to an example of the disclosure, in the manufacturing of the silicon negative electrode material powder in which crystalline silicon is impregnated inside a multicomponent silicide matrix, a rapid cooling speed may be 10⁵ K/Sec to 10⁷ K/Sec.

In addition, according to another example of the disclosure, a silicon composite negative electrode material may include: a multicomponent silicide matrix comprising aluminum (Al), nickel (Ni), boron (B), copper (Cu), and silicon (Si), wherein a difference in the sizes of the atomic radii of each of the aluminum (Al), nickel (Ni), boron (B), copper (Cu), and silicon (Si) is 10% or more; and crystalline silicon nanoparticles impregnated within the silicon matrix.

In addition, according to another example of the disclosure, a silicon composite negative electrode material may include: a multicomponent silicide matrix composed of a material represented by Chemical Formula 1; and
crystalline silicon nanoparticles impregnated within the silicon matrix:

   [Chemical Formula1] Siₐ(Al_{b}Ni_{c}Cu_{d}Bₑ)
where a is a real number between 0.24 and 0.75, b is a real number between 0.18 and 0.33, c is a real number between 0.03 and 0.2, d is a real number between 0.03 and 0.13, and e is a real number between 0.01 and 0.1.

Another example of the disclosure provides a silicon negative electrode active material.

The content of the silicon composite negative electrode material may be 5 to 10 wt% relative to the total silicon negative electrode active material, and the content of graphite may be 90 to 95 wt% relative to the total silicon negative electrode active material.

A negative electrode material for a lithium secondary battery according to an example of the disclosure has a multicomponent silicide matrix surrounding silicon nanoparticles, which has a buffering effect when the volume of silicon expands.

In addition, by adding copper (Cu) to the multicomponent silicide matrix, the long-life characteristics can be improved due to the stress relaxation and improvement of electrical conductivity in the matrix, and by setting an optimal ratio of copper (Cu) and boron (B), the stress relaxation is achieved through the improvement of strength and ductility characteristics, thereby solving the problem of particle destruction of a silicon negative electrode material during a charge and discharge cycle.

The effects of the disclosure are not limited to the effects described above, and should be understood to include all effects that are inferable from the configuration of the disclosure described in the detailed description or claims of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic view illustrating a silicon composite negative electrode material according to an example of the disclosure;
FIGS. 2A, 2B, 2C, and 2D are each a cross-sectional and elemental analysis image of a silicon negative electrode material according to an example of the disclosure;
FIGS. 3A and 3B are each an XRD graph of a silicon negative electrode material according to an example of the disclosure;
FIG. 4 is an FE-SEM image showing the evaluation results of maintaining the shape of a silicon negative electrode material before and after a cycle according to an example of the disclosure;
FIGS. 5A and 5B are each an exemplary view showing the electrical conductivity of a silicon negative electrode material according to an example of the disclosure;
FIGS. 6A and 6B are each an exemplary view showing the 1-cycle characteristics of a single electrode of an example of the disclosure and a comparative example; and
FIGS. 7A and 7B are graphs evaluating the cycle characteristics of a single electrode and a composite electrode of an example of the disclosure.

### DETAILED DESCRIPTION

Hereinafter, the disclosure will be described with reference to the accompanying drawings. However, the disclosure may be implemented in various different forms, and therefore is not limited to the examples described herein. In addition, in order to clearly describe the disclosure in the drawings, parts that are not related to the description are omitted, and similar parts are given similar drawing reference numerals throughout the specification.

In the entire specification, when a part is said to be "connected (linked, contacted, coupled)" to another part, this includes not only the case where it is "directly connected" but also the case where it is "indirectly connected" with another member in between. In addition, when a part is said to "include" a certain component, this does not mean that other components are excluded unless otherwise specifically stated, but that other components may be additionally provided.

The terms used in this specification are used only to describe specific examples and are not intended to limit the disclosure. The singular expression includes the plural expression unless the context clearly indicates otherwise. In this specification, the terms "include" or "have" are intended to specify the presence of a feature, number, step, operation, component, part, or combination thereof described in the specification, but should be understood as not excluding in advance the possibility of the presence or addition of one or more other features, numbers, steps, operations, components, parts, or combinations thereof.

Hereinafter, examples of the disclosure will be described in detail with reference to the accompanying drawings. For reference, the drawings may be somewhat exaggerated to explain the features of the disclosure. In this case, it is preferable to interpret them in light of the entire intent of this specification.

**A silicon composite negative electrode material according to an example of the disclosure will be described.**

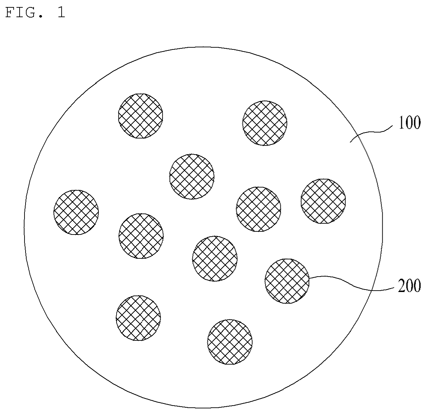

FIG. 1 is a schematic view illustrating a silicon composite negative electrode material according to an example of the disclosure.

A silicon composite negative electrode material according to an example of the disclosure may include: a multicomponent silicide matrix containing aluminum (Al), nickel (Ni), boron (B), copper (Cu), and silicon (Si); and crystalline silicon nanoparticles impregnated within the silicon matrix.

The disclosure is characterized by including a multicomponent silicide matrix 100.

At this time, the multicomponent silicide matrix may be composed of a material represented by Chemical Formula 1.

[Chemical Formula1] Siₐ(Al_{b}Ni_{c}Cu_{d}Bₑ)

where a is a real number between 0.24 and 0.75, b is a real number between 0.18 and 0.33, c is a real number between 0.03 and 0.2, d is a real number between 0.03 and 0.13, and e is a real number between 0.01 and 0.1.

As described in the above technical background of the invention, conventional multicomponent silicide compounds are composed in a structure in which a silicide matrix phase surrounds a silicon phase in the case of a 3-component or 4-component alloy powder such as Si-Al-Ni or Si-Al-Fe-Ni, and in the case of such 3-component or 4-component systems, there was a problem in that capacity deterioration occurred over the cycle and good cycle life stability could not be secured, for which the reason was that the surrounding silicide matrix phase did not sufficiently buffer the volume change of the silicon phase inside the powder.

The silicide matrix of the disclosure is characterized by being composed of a 5-component system in order to solve the above-described problem.

At this time, the difference in the atomic radius of each element included in the silicide matrix of the disclosure should be 10% or more.

At this time, the size of each atomic radius may be specifically Si (atomic radius: 117Å), Al (atomic radius: 143Å), Ni (atomic radius: 125Å), B (atomic radius: 88Å), and Cu (atomic radius 128Å).

At this time, Cu may play a catalytic role that can help atomize silicon nucleation during the initial silicon nucleation process.

In addition, if there are many elements that make up the alloy so that the atomic radius size difference is 10% or more, then, in the liquid phase, the deformation due to the size difference of these atoms is reduced by the unique open structure of the liquid phase itself, and furthermore, if the atomic size distribution is large, the atomic structure of the liquid phase becomes dense.

If this quintuple alloy composition is composed of many types of alloying elements during solidification, and in order to generate a crystal nucleus from a liquid solution, the atoms are arranged in a three-dimensionally regular space throughout the interior of the crystal, so the nucleus must also have a very complex lattice structure corresponding to this when trying to crystallize.

In order for a nucleus with such a complex lattice structure to be formed, the alloying element atoms must have sufficient mobility to diffuse, and the factor that suppresses this is the strain energy due to the difference in atomic size between these alloying elements.

The greater the size difference between these elements, the greater the strain energy; therefore, if more alloying elements are included, the probability of crystallization when the alloy solidifies is greatly reduced, and the probability of forming a relatively small grain size increases.

Hereinafter, each element of the five-component alloy composition will be described.

First, among the elements added to the silicon negative electrode material composition, aluminum Al improves the conductivity of the silicon negative electrode material and exists as a silicide matrix, relieving stress due to silicon volume expansion, and may react with lithium to supplement the capacity of the silicon negative electrode material.

At this time, the aluminum Al content may be 18 atomic% or more and 33 atomic% or less relative to the total content of the entire multicomponent silicon matrix, wherein if the aluminum content is less than 18 atomic%, the ductility of the matrix may be reduced, which may result in a decrease in the supporting matrix role that alleviates silicon volume expansion and a decrease in conductivity, and if it exceeds 33 atomic%, a capacity reduction problem may occur due to excessive silicide matrix generation.

In addition, nickel Ni acts as an additive to improve the conductivity of the silicon anode, and when Ni is added, cycling stability and conductivity may be improved. Si-Ni alloy phases NiSi, NiSi₂, Ni₃Si₂, and Ni₃Si are inactive to lithium ions and may only function as supporting materials, and as the Ni content increases, it combines with silicon to exist as an intermetallic compound, which causes a decrease in battery capacity.

At this time, the nickel Ni content may be 3 atomic% or more and 20 atomic% or less relative to the total content of the entire multicomponent silicon matrix, wherein if the nickel content is less than 3 atomic%, there may be a problem of insufficient conductivity being provided, and if it exceeds 20 atomic%, there may be a problem of reduced capacity of the silicon composite cathode due to excessive formation of inactive materials.

In addition, since boron (B) has the smallest atomic radius among the elements added to the composition of the silicon negative electrode material, adding B may improve the amorphous forming ability of the silicon negative electrode material, thereby minimizing the silicon grain size, and has the characteristic of increasing strength when alloying with other metals.

At this time, the boron (B) content may be 1 atomic% or more and 10 atomic% or less relative to the total content of the entire multicomponent silicon matrix, wherein if the boron content is less than 1 atomic%, the amorphous forming ability may decrease, which may cause problems with silicon crystal grain refinement, and if it exceeds 10 atomic%, the brittleness may increase, which may cause problems with particle destruction.

In addition, as mentioned above, copper (Cu) acts as a catalyst, has the characteristics of high electrical conductivity, and has high ductility, so when alloyed, it imparts ductility to the matrix and buffers stress during volume expansion. In addition, since the elements applied to the silicon negative electrode material melt at a lower temperature than silicon, no additional melting process occurs.

At this time, the copper Cu content may be 3 atomic% or more and 13 atomic% or less relative to the total content of the entire multicomponent silicon matrix, wherein if the copper content is less than 3 atomic%, there may be a problem that sufficient performance is not expressed for the addition effect, and if it exceeds 13 atomic%, there may be a problem that the capacity is reduced due to excessive reaction with other elements to form an intermetallic compound.

At this time, the sum of the atomic% of Cu and the atomic% of B present inside the multicomponent silicide matrix is 7 atomic% or more and 12 atomic% or less, and in particular, the ratio of Cu atomic%/(Cu atomic% + B atomic%) is 71% or more and 83% or less.

At this time, in the disclosure, if the content of the copper (Cu) and boron (B) is less than 7 atomic%, there may be a problem that sufficient performance is not expressed for the addition effect, and if the content of the copper (Cu) and boron (B) exceeds 12 atomic%, there may be a problem that the capacity is reduced and brittleness increases due to excessive reaction with other elements to form an intermetallic compound.

In addition, the ratio of the Cu atomic%/(Cu atomic% + B atomic%) is a value for the content ratio of Cu compared to the total copper (Cu) and boron (B), and may mean improvement in ductility and conductivity within the matrix, and if the above formula is satisfied, the effect of excellently maintaining the life characteristics of the silicon composite cathode may be derived.

At this time, the content of silicon in the multicomponent silicide matrix may include the remainder after containing the aluminum, nickel, boron, and copper described above.

At this time, the multicomponent silicide matrix contains crystalline silicon nanoparticles inside, and may perform a buffering role when the volume of the silicon nanoparticles expands.

Hereinafter, the silicon nanoparticles contained in the silicon composite negative electrode material will be described.

The silicon atomic % may contain the aluminum, nickel, boron, and copper described above based on the total atomic % of the entire silicon composite negative electrode material, and then the remainder may be included.

Therefore, the negative electrode material for a lithium secondary battery according to an example of the disclosure may be characterized by the effect of the multicomponent silicide matrix surrounding the silicon nanoparticles buffering the stress when the volume of the silicon expands.

**A method for manufacturing a silicon composite negative electrode material according to another example of the disclosure will be described.**

A method for manufacturing a silicon composite negative electrode material according to an example of the disclosure may include: manufacturing a melt by putting aluminum (Al), nickel (Ni), boron (B), copper (Cu) and silicon (Si) metals in a specific mixing ratio into a crucible and melting them; and rapidly cooling the melt with high-pressure sprayed water and then classifying powder to manufacture silicon negative electrode material powder in which crystalline silicon is impregnated inside a multicomponent silicide matrix.

Conventional alloy-based silicon negative electrode materials form a crystal phase with a regular arrangement of atoms when solidified from a liquid phase. However, if the cooling speed during solidification is sufficiently large beyond the critical value to limit the nucleation and growth of the crystal phase, the irregular atomic structure of the liquid phase may be maintained as a solid phase. This type of alloy is generally called an amorphous alloy.

In addition, conventionally, as a method for manufacturing negative electrode materials for lithium-ion batteries, a number of necessary raw materials are mixed and melted, an ingot is made, an amorphous ribbon strip is formed by melt spinning, and then the obtained ribbon strip is pulverized and mixed with carbon, a polyimide coating solution, and NMP through a milling process to manufacture an alloy-based silicon negative electrode material.

However, the actual application of the silicon negative electrode material is very limited because the process of manufacturing the amorphous ribbon strip and then powdering it is very complicated and there are limitations in shape and size.

In addition, since the price of silicon negative electrode material made by the melt spinning process is high, there is a problem that forming silicon negative electrode material with this alloy composition as the main component is not competitive in price. In addition, since amorphous alloys exhibit their characteristics only in the amorphous state, there is a problem that the battery characteristics are affected when the amorphous structure changes into a crystalline structure by heat treatment when introducing a process such as carbon coating to prevent silicon side reactions.

On the other hand, the disclosure relates to a manufacturing method of silicon negative electrode material powder including crystalline silicon and a silicide matrix in a metal alloy by rapidly cooling the melt sprayed through a nozzle with water sprayed at high pressure after melting four component elements other than silicon in a crucible at a certain mixing ratio.

Hereinafter, the method for manufacturing a silicon composite negative electrode material of the disclosure will be described.

The first step may include manufacturing a melt by putting the aluminum (Al), nickel (Ni), boron (B), copper (Cu), and silicon (Si) metals in a specific mixing ratio into a crucible and melting them.

At this time, the content of the aluminum (Al) may be18 atomic% or more and 33 atomic% or less with respect to the entire melt, the content of the nickel (Ni) may be3 atomic% or more and 20 atomic% or less with respect to the entire melt, the content of the boron (B) may be1 atomic% or more and 10 atomic% or less with respect to the entire melt, the content of the copper (Cu) may be3 atomic% or more and 13 atomic% or less with respect to the entire melt, and the remainder may be silicon.

At this time, the aluminum (Al) content may be 18 atomic% or more and 33 atomic% or less relative to the entire multicomponent silicon matrix content, wherein if the aluminum content is less than 18 atomic%, the ductility of the matrix may be reduced, which may result in a decrease in the supporting matrix role that alleviates silicon volume expansion and a decrease in conductivity, and if it exceeds 33 atomic%, there may be a capacity reduction problem due to excessive silicide matrix generation.

At this time, the nickel (Ni) content may be 3 atomic% or more and 20 atomic% or less relative to the entire multicomponent silicon matrix content, wherein if the nickel content is less than 3 atomic%, there may be a problem that sufficient conductivity is not provided, and if it exceeds 20 atomic%, there may be a capacity reduction problem of the silicon composite negative electrode due to excessive formation of inactive materials.

At this time, the boron (B) content may be 1 atomic% or more and 10 atomic% or less relative to the total content of the entire multicomponent silicon matrix, wherein if the boron content is less than 1 atomic%, the amorphous forming ability may decrease, which may cause problems with silicon crystal grain refinement, and if it exceeds 10 atomic%, the brittleness may increase, which may cause problems with particle destruction.

At this time, the copper Cu content may be 3 atomic% or more and 13 atomic% or less relative to the total content of the entire multicomponent silicon matrix, wherein if the copper content is less than 3 atomic%, there may be a problem that sufficient performance is not expressed for the addition effect, and if it exceeds 13 atomic%, there may be a problem that the capacity is reduced due to excessive reaction with other elements to form an intermetallic compound.

In addition, the sum of the atomic % of Cu and the atomic % of B present inside the multicomponent silicide matrix is 7 atomic % or more and 12 atomic % or less, and in particular, the ratio of Cu atomic %/(Cu atomic % + B atomic %) is 71% or more and 83% or less; when the ratio of the copper (Cu) atoms and the boron (B) atoms is adjusted, the brittle element B may increase the particle strength through the appropriate ratio adjustment of the ductile and brittle materials, thereby satisfying the condition that the particles do not break, and the ductile Cu may have a relaxation characteristic for stress due to particle expansion.

At this time, the material including the copper (Cu) may be copper (Cu), copper (I) oxide (Cu₂O), copper (II) oxide (CuO), copper aluminum (Cu₂Al₃), bronze (Cu-Sn), brass (Cu-Zn), and a mixture including one or more thereof, or one thereof.

The second step may include rapidly cooling the melt with high-pressure sprayed water and then classifying the powder to manufacture a silicon negative electrode material powder impregnated with crystalline silicon inside a multicomponent silicide matrix.

The rapid cooling speed when rapidly cooling with the high-pressure sprayed water is characterized by being 10⁵ K/Sec to 10⁷ K/Sec.

At this time, if the rapid cooling speed is less than 10⁵ K/Sec, excessive growth of the silicon single phase inside the silicon negative electrode material occurs, which may cause stress that cannot be alleviated in the matrix, ultimately resulting in destruction of the silicon negative electrode material. A low cooling speed may cause a compound to be formed with silicon and metals on the matrix, resulting in a low level of capacity, and thus the high-capacity characteristics may not be expressed. In addition, if the rapid cooling speed exceeds 10, some of the silicon crystals inside the silicon composite negative electrode may be in a mixed state of crystalline and amorphous, which may result in a problem of reduced capacity of the silicon composite negative electrode; therefore, the rapid cooling speed may be set to 10⁵ K/Sec to 10⁷ K/Sec.

At this time, in the case of the silicon composite negative electrode material of the disclosure, a five-component negative electrode material composition was designed to improve the silicon particle size, the difference in the size of the mutual atomic radii is 10% or more, the deformation due to the size difference of these atoms is reduced in the liquid phase due to the unique open structure of the liquid phase itself, and furthermore, when the atomic size distribution is large, the atomic structure of the liquid phase may become denser than in other cases.

At this time, the reason why the atomic structure of the liquid phase may become denser when the atomic size distribution is large is that the five-component alloy composition is composed of many types of alloy elements during solidification, and in order to generate a crystal nucleus from a liquid solution having the structural characteristics mentioned above, the atoms are arranged in a three-dimensionally regular space throughout the interior of the crystal, so that the nucleus must also have a very complex lattice structure corresponding to this when trying to crystallize. In order for a nucleus with such a complex lattice structure to be formed, the alloying element atoms must have sufficient mobility to diffuse, and the factor that suppresses this is the strain energy due to the difference in atomic size between these alloying elements. The greater the size difference between these alloying elements, the greater this strain energy becomes, so when more alloying elements are included, the probability of crystallization when the alloy solidifies is greatly reduced, and the probability of forming a relatively small grain size is greatly increased.

Accordingly, the average particle size of the silicon composite negative electrode material powder manufactured by the method for manufacturing a silicon composite negative electrode material may be 5 um to 6 um, wherein the reason for the above-described particle size is that: when the average particle size of the silicon composite negative electrode material is less than 5 um, a problem occurs in which a binder must be added due to an increase in the specific surface area, and the powder particles are likely not to be sufficiently dispersed due to the small powder size; when the electrode is manufactured, the movement of the electrolyte is very difficult, which may cause difficulties in ion conduction, and thus a problem in which the capacity expression of the battery is reduced may occur; and when the average particle size exceeds 6 um, a problem in ion diffusion may occur due to an increase in the diffusion length of lithium ions, and an intercalation problem may occur when mixed with natural graphite, and wherein the size is thus most preferable to be 5 um or more and 6 um or less, but is not limited to the above numerical range.

Hereinafter, the disclosure will be described in more detail through Production Examples and Experimental Examples. These Production Examples and Experimental Examples are intended solely to illustrate the disclosure, and the scope of the disclosure is not limited by these Production Examples and Experimental Examples.

### Production Example1: silicon composite negative electrode material manufacturing (atomic % of Al, Ni, B, Cu=25:3:2:10)

First, aluminum 25 at%, nickel 3 at%, boron 2 at%, copper 10 at%, and the remainder silicon (60 at%) were put into a high-frequency melting furnace, and then melted into a liquid state in a high-frequency melting furnace at 1,550 degrees or higher for 45 minutes or more and 120 minutes or less, and specifically for 60 minutes or more and 100 minutes or less, to create a uniform state.

Next, powder was manufactured using the atomizing method, and more specifically, the molten alloy was differentiated and cooled using a high-pressure coolant. At this time, the cooling speed was 10⁵ K/Sec to 10⁷ K/Sec.

After that, the powder was classified to manufacture silicon negative electrode material powder with an average particle size of about 5 um to 6 um.

### Production Example2: silicon composite negative electrode material manufacturing (atomic % of Al, Ni, B, Cu=30:3:2:5)

In this Production Example 2, the same method as in the Production Example 1 process was performed, except that 30 atomic% aluminum, 3 atomic% nickel, 2 atomic% boron, 5 atomic% copper, and the remainder silicon (60 atomic%) are included.

### Production Example3: silicon composite negative electrode material manufacturing (atomic % of Al, Ni, B, Cu=27:4:2:7)

In this Production Example 3, the same method as in the Production Example 1 process was performed, except that 27 atomic% aluminum, 4 atomic% nickel, 2 atomic% boron, 7 atomic% copper, and the remainder silicon (60 atomic%) are included.

### Comparative Example1: silicon composite negative electrode material manufacturing (atomic % of Al, Ni, B, Cu=28:3:1:8)

In this Comparative Example1, the same method was performed as in the Production Example1 process, except that 28 atomic% aluminum, 3 atomic% nickel, 1 atomic% boron, 8 atomic% copper, and the remainder silicon (60 atomic%) are included.

### Comparative Example2: silicon composite negative electrode material manufacturing (atomic % of Al, Ni, B, Cu=32:3:2:3)

In this Production Example 2, the same method as in the Production Example 1 process was performed, except that 32 atomic% aluminum, 3 atomic% nickel, 2 atomic% boron, 3 atomic% copper, and the remainder silicon (60 atomic%) are included.

### Comparative Example3: silicon composite negative electrode material manufacturing (atomic % of Al, Ni, B, Cu=22:3:5:10)

In this Comparative Example3, the same method as in the Production Example1 process was performed, except that 22 atomic% aluminum, 3 atomic% nickel, 5 atomic% boron, 10 atomic% copper, and the remainder silicon (60 atomic%) are included.

### Comparative Example4 silicon composite negative electrode material manufacturing (atomic % of Al, Ni, B, Cu=28:4:1.2:6.8)

In this Comparative Example4, the same method as in the Production Example 1 process was performed, except that i28 atomic% aluminum, 4 atomic% nickel, 1.2 atomic% boron, 6.8 atomic% copper, and the remainder silicon (60 atomic%) are included.

### Comparative Example5: silicon composite negative electrode material manufacturing (atomic % of Al, Ni, B, Cu=23:6:3.5:7.5)

In this Comparative Example5, the same method was performed as in the Production Example1 process, except that aluminum 23 at%, nickel 6 at%, boron 3.5 at%, copper 7.5 at%, and the remainder silicon (60 at%) are included.

Table 1 below shows the atomic % of Examples and Comparative Examples, and the numerical values are as follows.

**[Table 1]**

| Division | Si(at%) | Al(at%) | Ni(at%) | B(at%) | Cu(at%) |
|---|---|---|---|---|---|
| Example 1 | 60 | 25 | 3 | 2 | 10 |
| Example 2 | 60 | 30 | 3 | 2 | 5 |
| Example 3 | 60 | 27 | 4 | 2 | 7 |
| Comparati ve Example 1 | 60 | 28 | 3 | 1 | 8 |
| Comparati ve Example 2 | 60 | 32 | 3 | 2 | 3 |
| Comparati ve Example 3 | 60 | 22 | 3 | 5 | 10 |
| Comparati ve Example 4 | 60 | 28 | 4 | 1.2 | 6.8 |
| Comparati ve Example 5 | 60 | 23 | 6 | 3.5 | 7.5 |

Table 2 below shows the ratio of Cu to Cu+B, set at various ratios from 60% to 89%.

**[Table 2]**

| Division | Si + Al (at%) | Cu + B (at%) | Cu / (Cu+B) % |
|---|---|---|---|
| Example 1 | 85 | 12 | 83% |
| Example 2 | 90 | 7 | 71% |
| Example 3 | 87 | 9 | 78% |
| Comparative Example 1 | 88 | 9 | 89% |
| Comparative Example 2 | 92 | 5 | 60% |
| Comparative Example 3 | 82 | 15 | 67% |
| Comparative Example 4 | 88 | 8 | 85% |
| Comparative Example 5 | 83 | 11 | 68% |

### Example1: single electrode manufacturing

In Production Examples above, the manufactured silicon negative electrode material and the binder, PI, and the conductive material were mixed at a weight ratio of 86.6:10:3.4 to manufacture negative electrode active material slurry.

At this time, the manufactured slurry was coated on a copper foil current collector to manufacture a negative electrode plate, and the coated plate was dried at 110°C for 20 minutes and then rolled so that the density of the negative electrode plate became 1.5 g/cc.

Next, the dried negative electrode plate was heat-treated in an Ar atmosphere at 350°C for 2 hours, and then the plate was cut to a size of 14 mm to manufacture a negative electrode to be applied to a coin cell.

At this time, a Li metal was used as the counter electrode, a polypropylene separator with a thickness of 20 mm was used, and a coin cell of the 2032 standard was manufactured by injecting and compressing the electrolyte.

At this time, the electrolyte was used by adding 10% FEC, an electrolyte additive, to a mixed solvent of ethylene carbonate and diethyl carbonate, and dissolving LiPF₆ to a concentration of 1.0 M.

### Example2: silicon composite negative electrode material manufacturing

First, the silicon negative electrode material manufactured in Example 1 was mixed with graphite at a weight ratio of 9:1, and the SBR/CMC conductive material as a binder was mixed at a weight ratio of 95:4.8:0.2 to manufacture negative electrode active material slurry.

Next, the manufactured slurry was coated on a copper foil current collector to manufacture a negative electrode plate, and the coated plate was dried at 110°C for 20 minutes and then rolled to make the density of the negative electrode plate 1.5 g/cc.

Next, the dried negative electrode plate was heat-treated in a vacuum atmosphere at 180°C for 10 hours, and then the plate was cut to a size of 14 mm to manufacture a negative electrode to be applied to a coin cell.

At this time, a Li metal was used as the counter electrode, a polypropylene separator with a thickness of 20 mm was used, and a coin cell of the 2032 standard was manufactured by injecting and compressing the electrolyte.

At this time, to manufacture a single electrode, the electrolyte was used by adding 10% of FEC, an electrolyte additive, to a mixed solvent of ethylene carbonate and diethyl carbonate and dissolving LiPF₆ to a concentration of 1.0 M.

### Experimental Example

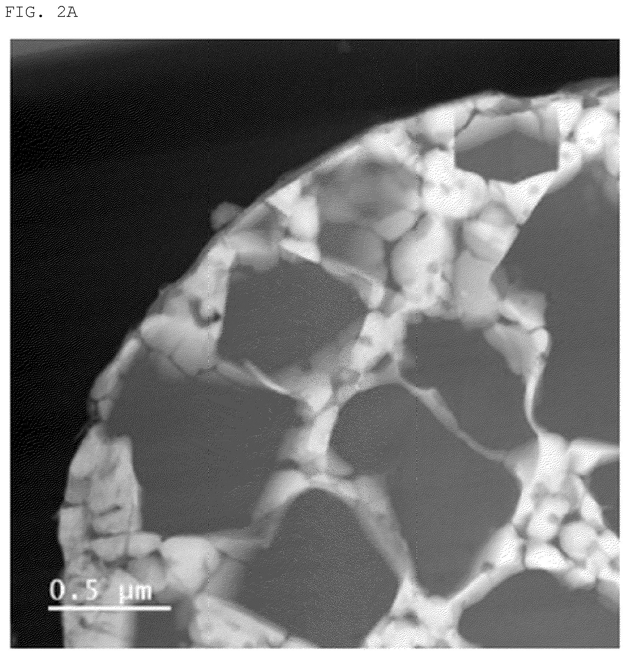

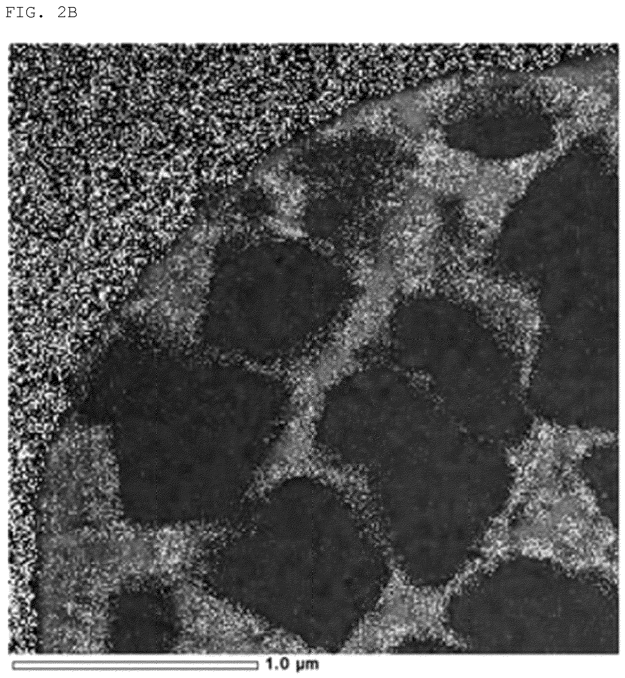

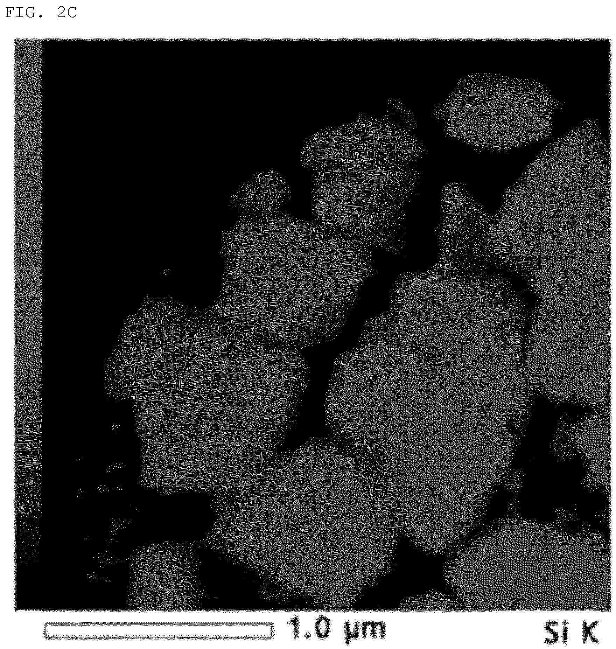

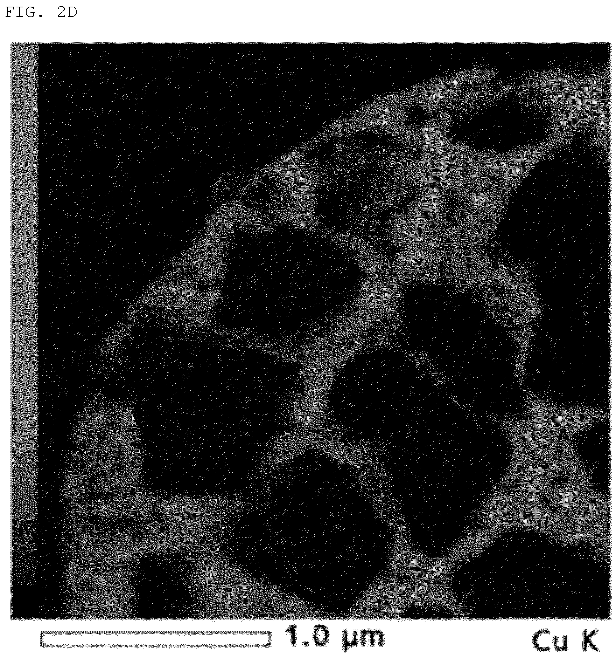

FIGS. 2A, 2B, 2C, and 2D are each a cross-sectional and elemental analysis image of a silicon negative electrode material according to an example of the disclosure.

Referring to FIGS. 2A, 2B, 2C, and 2D, it is possible to confirm that crystalline silicon nanoparticles are included within the multicomponent silicide matrix.

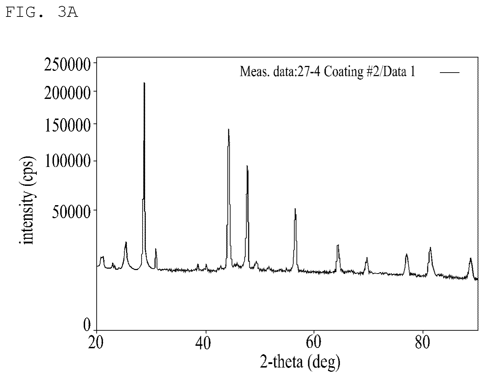

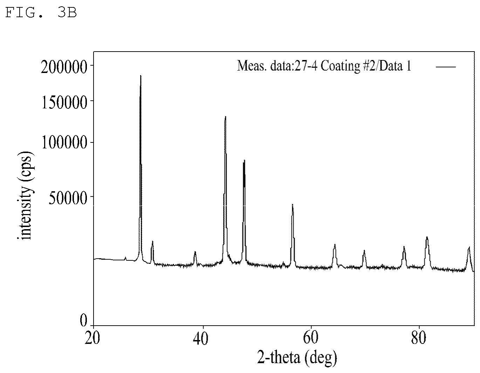

FIGS. 3A and 3B are each an XRD graph of a silicon negative electrode material according to an example of the disclosure.

Referring to FIGS. 3A and 3B, the new peak existing between 2θ° was confirmed as a new phase due to the addition of Cu, and it was confirmed through TEM/EDS analysis that the Cu phase was formed in the matrix.

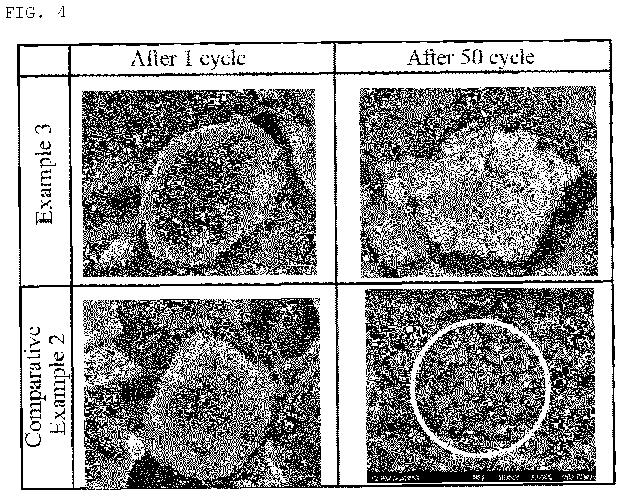

FIG. 4 is an FE-SEM image showing the evaluation results of maintaining the shape of a silicon negative electrode material before and after a cycle according to an example of the disclosure.

Referring to FIG. 4, as a result of checking the surface characteristics of the silicon composite negative electrode material before and after the charge/discharge cycles of Example 3 and Comparative Example 2, it is possible to confirm that, after the cycle life evaluation, the silicon composite negative electrode material of Example is not destroyed because the surrounding matrix tissue buffers the volume expansion of the silicon.

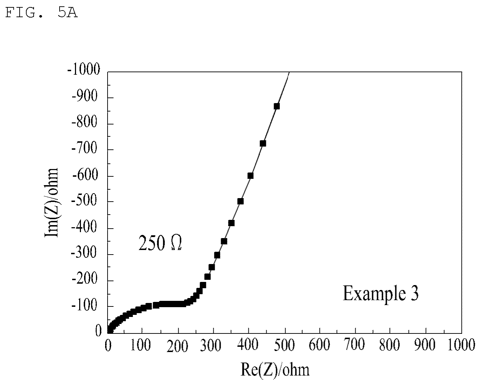

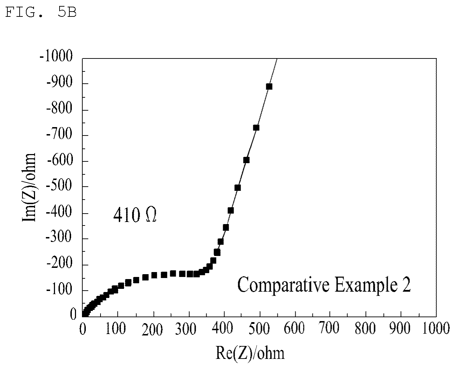

FIGS. 5A and 5B are each an exemplary view showing the electrical conductivity of a silicon negative electrode material according to an example of the disclosure.

Referring to FIGS. 5A and 5B, in the case of electrical conductivity through impedance analysis, it was confirmed that the internal resistance of the silicon negative electrode material decreased from 450Ω to 210Ω. Through this, it was confirmed that it has excellent electrical conductivity characteristics due to the presence and increase in content of internal Cu.

Hereinafter, the results of the charge and discharge experiment of the lithium ion battery including the silicon composite negative electrode material of the disclosure will be described.

In this charge and discharge experiment, charging was performed in CC Mode at a current density corresponding to Cycle: 0.2C, and charging was performed in CV Mode from the point where it reached 0.005V to the point where it reached 0.005C.

After that, while the discharge was performed at a current density corresponding to 0.2C rate, the above charge and discharge reactions were performed 50 times to perform the Cycle stage, and a rest time of 1 hour was given between each charge and discharge.

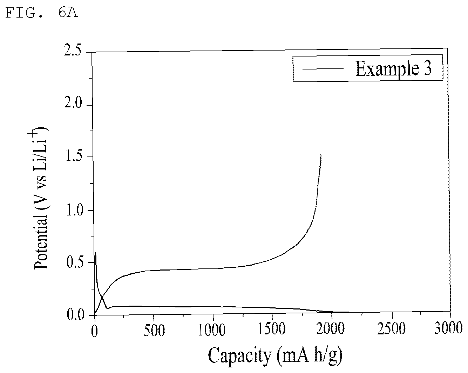

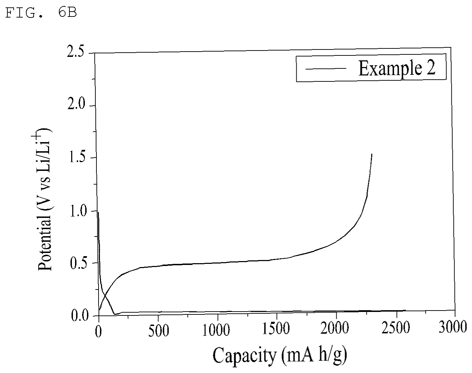

FIGS. 6A and 6B are each an exemplary view showing the 1-cycle characteristics of a single electrode of an example of the disclosure and a comparative example.

Referring to FIGS. 6A and 6B, based on the initial charge/discharge graph of Example 3, the discharge capacity of Example 3 was 1,923 mAh/g, and the discharge capacity of Comparative Example2 was 2,312 mAh/g.

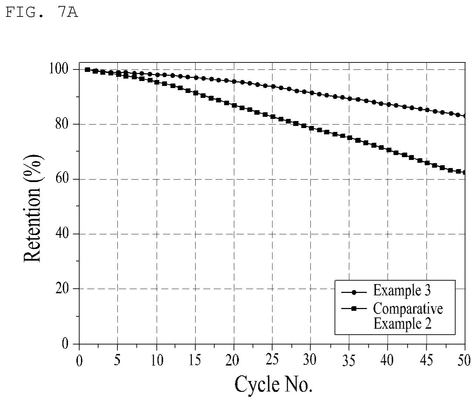

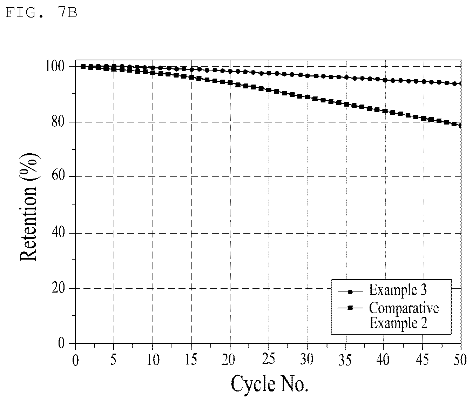

FIGS. 7A and 7B are graphs evaluating the cycle characteristics of a single electrode and a composite electrode of an example of the disclosure.

Referring to FIG. 7A, the single electrode life maintenance rate value of Example 3 is 83%, and the single electrode life maintenance rate value of Comparative Example 2 is 62%, confirming that an Example has an excellent life maintenance rate. In addition, referring to FIGS. 7B, the mixed electrode life maintenance rate value of Example 3 is 93%, and the mixed electrode life maintenance rate value of Comparative Example 2 is 79%, confirming that Example 3 shows an excellent life maintenance rate in both single electrodes and mixed electrodes.

Table 3 below shows the results of the evaluation of the electrochemical characteristics of the single electrodes of Examples and Comparative Examples.

**[Table 3]**

| Division | 1 Cycle | | 50 Cycle | |
|---|---|---|---|---|
| | Discharge capacity (mAh/g) | Coulombic efficiency (%) | Capacity retention rate (%) | Coulombic efficiency (%) |
| Example 1 | 1,893 | 90.0 | 81.8 | 98.3 |
| Example 2 | 2,278 | 90.8 | 78.0 | 97.4 |
| Example 3 | 1,923 | 89.9 | 83.6 | 98.5 |
| Comparati ve Example 1 | 1,973 | 90.1 | 75.6 | 98.1 |
| Comparati ve Example 2 | 2,312 | 90.1 | 62.7 | 97.4 |
| Comparati ve Example 3 | 1,822 | 88.9 | 64.5 | 97.5 |
| Comparati ve Example 4 | 1,970 | 90.1 | 74.0 | 97.9 |
| Comparati ve Example 5 | 1,854 | 89.8 | 73.9 | 98.0 |

It was confirmed that as the content of Si+Al increased, the initial discharge capacity increased, and additionally, the effects of Cu and B for improving the cycle life characteristics were confirmed.

The atomic% content of Cu+B was conducted from 2 to 15 atomic%, and among them, it was confirmed that the life characteristics were excellent when the content was from 7 to 12 atomic%.

In addition, when the content of Cu atomic%/(Cu atomic%+B atomic%) was confirmed, it was confirmed that the life characteristics were excellent when the ratio was from 71 to 83%.

Table 4 below shows the results of the evaluation of the electrochemical characteristics of the mixed electrodes of Examples and Comparative Examples.

**[Table 4]**

| Division | 1 Cycle | | 50 Cycle | |
|---|---|---|---|---|
| | Discharge capacity (mAh/g) | Coulombic efficiency (%) | Capacity retention rate (%) | Coulombic efficiency (%) |
| Example 1 | 514 | 92.2 | 92.3 | 99.7 |
| Example 2 | 540 | 92.6 | 88.5 | 99.8 |
| Example 3 | 520 | 92.5 | 93.6 | 99.7 |
| Compara tive Example 1 | 529 | 91.9 | 86.4 | 99.7 |
| Compara tive Example 2 | 544 | 92.0 | 78.2 | 99.5 |
| Compara | 494 | 91.8 | 81.1 | 99.5 |

| | | | | |
|---|---|---|---|---|
| tive Example 3 | | | | |
| Compara tive Example 4 | 530 | 91.9 | 86.0 | 99.7 |
| Compara tive Example 5 | 506 | 91.9 | 84.5 | 99.6 |

Based on the results of the single electrode, the electrode was manufactured by mixing 10 wt% silicon negative electrode material into graphite and the electrochemical characteristics were evaluated, and the results confirmed a similar trend to the single electrode.

In Example 1, the shape of the silicon negative electrode material was maintained due to the buffer role of the silicide matrix surrounding the silicon tissue even when internal stress occurred according to the cycle, whereas in Comparative Example 1, the silicon negative electrode material was destroyed as it could not withstand the internal stress as the cycle progressed.

The situation in which silicon and Cu were evenly distributed in the matrix during the silicon negative electrode material manufacturing was confirmed through TEM/EDS.

The description of the disclosure is for illustrative purposes, and those skilled in the art will understand that it can be easily modified into other specific forms without changing the technical idea or essential features of the disclosure. Therefore, the examples described above should be understood as being exemplary in all respects and not limiting. For example, each component described as a single type may be implemented in a distributed manner, and likewise, components described as distributed may be implemented in a combined form.

The scope of the disclosure is indicated by the following claims, and all changes or modifications derived from the meaning and scope of the claims and their equivalent concepts should be interpreted as being included in the scope of the disclosure.

### [Explanation of reference numerals]

100: multicomponent silicide matrix
200: silicon nanoparticles

## Claims

1. A silicon composite negative electrode material, comprising:
a multicomponent silicide matrix containing aluminum (Al), nickel (Ni), boron (B), copper (Cu), and silicon (Si); and
crystalline silicon nanoparticles impregnated within the silicon matrix.

2. The silicon composite negative electrode material of claim 1, wherein the multicomponent silicide matrix is composed of a material represented by Chemical Formula 1:
[Chemical Formula1] Siₐ(Al_{b}Ni_{c}Cu_{d}Bₑ)
where a is a real number between 0.24 and 0.75, b is a real number between 0.18 and 0.33, c is a real number between 0.03 and 0.2, d is a real number between 0.03 and 0.13, and e is a real number between 0.01 and 0.1.

3. The silicon composite negative electrode material of claim 1, wherein the content of the aluminum (Al) is 18 atomic% or more and 33 atomic% or less relative to the total content of the entire multicomponent silicon matrix.

4. The silicon composite negative electrode material of claim 1, wherein the content of the nickel (Ni) is 3 atomic% or more and 20 atomic% or less relative to the total content of the entire multicomponent silicon matrix.

5. The silicon composite negative electrode material of claim 1, wherein the content of the boron (B) is 1 atomic% or more and 10 atomic% or less relative to the total content of the entire multicomponent silicon matrix.

6. The silicon composite negative electrode material of claim 1, wherein the content of the copper (Cu) is 3 atomic% or more and 13 atomic% or less relative to the total content of the entire multicomponent silicon matrix.

7. The silicon composite negative electrode material of claim 1, wherein the sum of the atomic % of the copper (Cu) and the atomic % of boron (B) is 7 atomic % or more and 12 atomic % or less.

8. The silicon composite negative electrode material of claim 1, wherein with respect to the content of the copper (Cu) and boron (B), a ratio of Cu atom%/(Cu atom% + B atom%) is 71% or more and 83% or less.

9. The silicon composite negative electrode material of claim 1, wherein the atomic % of silicon of the silicon composite negative electrode material is the remainder after containing the aluminum, nickel, boron, and copper.

10. A silicon composite negative electrode material, comprising:
a multicomponent silicide matrix comprising aluminum (Al), nickel (Ni), boron (B), copper (Cu), and silicon (Si), wherein a difference in the sizes of the atomic radii of each of the aluminum (Al), nickel (Ni), boron (B), copper (Cu), and silicon (Si) is 10% or more; and
crystalline silicon nanoparticles impregnated within the silicon matrix.

11. A silicon composite negative electrode material, comprising:
a multicomponent silicide matrix composed of a material represented by Chemical Formula 1; and
crystalline silicon nanoparticles impregnated within the silicon matrix:
[Chemical Formula1] Siₐ(Al_{b}Ni_{c}Cu_{d}Bₑ)
where a is a real number between 0.24 and 0.75, b is a real number between 0.18 and 0.33, c is a real number between 0.03 and 0.2, d is a real number between 0.03 and 0.13, and e is a real number between 0.01 and 0.1.

12. A method for manufacturing a silicon composite negative electrode material, the method comprising:
manufacturing a melt by putting aluminum (Al), nickel (Ni), boron (B), copper (Cu) and silicon (Si) metals in a specific mixing ratio into a crucible and melting them; and
rapidly cooling the melt with high-pressure sprayed water and then classifying powder to manufacture silicon negative electrode material powder in which crystalline silicon is impregnated inside a multicomponent silicide matrix.

13. The method of claim 12, wherein in the manufacturing of the melt, the content of the aluminum (Al) is 18 atomic% or more and 33 atomic% or less with respect to the entire melt, the content of the nickel (Ni) is 3 atomic% or more and 20 atomic% or less with respect to the entire melt, the content of the boron (B) is 1 atomic% or more and 10 atomic% or less with respect to the entire melt, the content of the copper (Cu) is 3 atomic% or more and 13 atomic% or less with respect to the entire melt, and the remainder is silicon.

14. The method of claim 12, wherein in the manufacturing of the silicon negative electrode material powder in which crystalline silicon is impregnated inside a multicomponent silicide matrix, a rapid cooling speed is 10⁵ K/Sec to 10⁷ K/Sec.

15. A silicon negative electrode active material, comprising the silicon composite negative electrode material of claim 1 and graphite.

16. The silicon negative electrode active material of claim 15, wherein the content of the silicon composite negative electrode material is 5 to 10 wt% relative to the total silicon negative electrode active material, and the content of the graphite is 90 to 95 wt% relative to the total silicon negative electrode active material.
